(19) Europäisches Patentamt
European Patent Office
Office européen des brevets

(11) **EP 4 775 316 A1**

(12) **EUROPEAN PATENT APPLICATION**

(43) Date of publication:
**15.07.2026 Bulletin 2026/29**

(21) Application number: **26150606.7**

(22) Date of filing: **07.01.2026**

(51) International Patent Classification (IPC):
**B05B 15/652** (2018.01)      **H01M 4/04** (2006.01)
**H01M 4/139** (2010.01)      **H01M 4/62** (2006.01)

(52) Cooperative Patent Classification (CPC):
**H01M 4/04; B05B 7/1486; B29D 7/01; H01M 4/139;**
**B05B 7/1404**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **10.01.2025 US 202519016706**

(71) Applicant: **Tesla, Inc.**
**Austin, TX 78725 (US)**

(72) Inventor: **MATTHEWS, Kevin Cornelius**
**Austin, 78725 (US)**

(74) Representative: **Zacco Sweden AB**
**P.O. Box 5581**
**Löjtnantsgatan 21**
**114 85 Stockholm (SE)**

(54) **INLINE AIR MILLING AND MIXING APPARATUSES FOR PROCESSING ELECTRODE FILM MIXTURES, AND METHODS THEREOF**

(57) A system for processing an electrode film mixture comprising an inline air milling apparatus coupled to a mixing apparatus, and methods thereof, are disclosed. Such a system may help adjust the particle size distribution and temperatures of the electrode film materials and distribute the materials more effectively, thereby improving material uniformity of the electrode film mixture.

FIG. 1

**Description**

PRIORITY APPLICATIONS

This application claims the benefit of priority to U.S. Patent Application No. 19/016,706, entitled "INLINE AIR MILLING AND MIXING APPARATUSES FOR PROCESSING ELECTRODE FILM MIXTURES, AND METHODS THEREOF," filed on January 10, 2025.

BACKGROUND

This disclosure relates to systems and methods for processing an electrode film mixture and products thereof. In particular, the systems and methods relate to processing electrode film mixtures using an air milling apparatus. Electrode film mixtures for typical energy storage devices include binder materials that are combined with active electrode materials. Generally, electrode film mixtures require effective distribution of binder materials prior to energy storage device assembly. In dry electrode film manufacturing processes, effective distribution of dry binders is combined with an active electrode material and calendered without the use of solvents to form a dry electrode film. However, an energy storage device including a processed dry electrode may exhibit challenges with high utilization, uniformity, and optimum particle size distribution of the binder materials, which are critical parameters to the electrode's electrochemical and mechanical properties. Conventional systems and methods addressing the binder distribution challenges may lead to unwanted material agglomeration and yield losses.

SUMMARY

For purposes of summarizing the invention and the advantages achieved over the prior art, certain objects and advantages of the invention are described herein. Not all such objects or advantages may be achieved in any particular embodiment of the invention. Thus, for example, those skilled in the art will recognize that the invention may be embodied or carried out in a manner that achieves or optimizes one advantage or group of advantages as taught herein without necessarily achieving other objects or advantages as may be taught or suggested herein.

In one aspect, a method of processing an electrode film mixture is described. The method includes: air milling a binder material by applying temperature-controlled gas with an air milling apparatus to form an air milled binder material, wherein the air milling apparatus includes an air milling chamber and a pressurization insert positioned within the air milling chamber, wherein the air milling apparatus is attached to a mixing apparatus including a mixing chamber and wherein the pressurization insert includes an outlet configured to provide a fluid communication between the air milling chamber and the mixing chamber, dispersing the air milled binder material into a mixing chamber including an active material, and mixing the air milled binder material and the active material in the mixing chamber to form an electrode film material mixture.

In another aspect, a system for processing an electrode film mixture is described. The system includes: a mixing apparatus including a mixing chamber, and an air milling apparatus including an air milling chamber and a pressurization insert positioned within the air milling chamber, wherein the air milling apparatus is attached to the mixing apparatus and wherein the pressurization insert includes an outlet configured to provide a fluid communication between the air milling chamber and the mixing chamber.

In some embodiments, the outlet includes a dispersion nozzle. In some embodiments, the mixing apparatus is a fluidized bed mixing apparatus. In some embodiments, the mixing chamber includes a mixing blade. In some embodiments, the system further includes a pressurized tank in fluid communication with the air milling apparatus.

In another aspect, a method of preparing an electrode film mixture is described. The method includes: air milling a material to form an air milled material, dispersing the air milled material into a mixing chamber including an active material, and mixing the air milled material and the active material in the mixing chamber to form an electrode film material mixture.

In some embodiments, the method further includes gravity feeding the air milled material into the mixing chamber. In some embodiments, the method further includes premixing the material with a conductive additive. In some embodiments, mixing the air milled material with the active material in the mixing chamber is performed by a high-shear process. In some embodiments, the air milled material includes a D50 average particle size distribution of less than about 30 $\mu$m.

In some embodiments, air milling includes applying temperature-controlled gas to the material. In some embodiments, the temperature-controlled gas includes a gas selected from the group consisting of hydrogen gas, nitrogen gas, argon gas, oxygen gas and combinations thereof. In some embodiments, air milling the material is performed at a gauge pressure between 0.1 atm to 4 atm.

In some embodiments, mixing is performed at a temperature of at least about 20°C. In some embodiments, the method further includes coating the active material with a carbon material prior to dispersing or mixing. In some embodiments, the carbon material includes activated carbon. In some embodiments, the active material is selected from the group consisting of graphite, lithium nickel manganese cobalt oxide (NMC), lithium nickel cobalt aluminum oxide (NCA), and combinations thereof.

In some embodiments, the method further includes preprocessing the material prior to air milling. In some embodiments, preprocessing includes temperature controlling the material to a temperature of about -200-300°C.

In some embodiments, the material is a binder material. In some embodiments, the binder material includes a dry fibrillizable binder. In some embodiments, the binder material is selected from the group consisting of polytetrafluoroethylene (PTFE), polyethylene (PE), polypropylene (PP), polyvinylidene fluoride (PVDF), polyvinylene chloride, poly(phenylene oxide) (PPO), polyethylene-block-poly(ethylene glycol), poly(ethylene oxide) (PEO), poly(phenylene oxide) (PPO), polyethylene-block-poly(ethylene glycol), polydimethylsiloxane (PDMS), polydimethylsiloxane-coalkylmethylsiloxane, polyalkylenes, polyethers, styrene-butadiene, styrene-butadiene rubber (SBR), carboxymethylcellulose (CMC), co-polymers of polysiloxanes and polysiloxane, branched polyethers, polyvinylethers, co-polymers thereof and combinations thereof. In some embodiments, the electrode film material mixture is substantially free of solvent residue.

BRIEF DESCRIPTION OF THE DRAWINGS

FIG. 1 is a schematic illustration of a processing system including an air milling apparatus and a mixing apparatus, according to some embodiments.

FIG. 2 is a schematic illustration of an air milling apparatus, according to some embodiments.

FIG. 3 is a schematic illustration of a portion of an air milling apparatus, according to some embodiments.

FIG. 4 is a schematic flow diagram of an air milling apparatus and a mixing apparatus, according to some embodiments.

FIG. 5 is a flowchart showing a method of processing an electrode film mixture including air milling, according to some embodiments.

FIG. 6 is a data plot showing binder material deagglomeration based on volume % and size, according to some embodiments.

FIG. 7 is a data plot showing particle size distribution using air milled and non-milled binder materials based on cumulative volume % and particle diameter, according to some embodiments.

FIG. 8A is a flow vector diagram showing flow rate of binder materials moving through a vertical cross-section an air milling apparatus, according to some embodiments.

FIG. 8B is a schematic illustration comparing an air flow path and a powder flow path, according to some embodiments.

FIG. 9 is a data plot showing pressure profiles of air flowing from the air milling chamber to the mixing chamber, according to some embodiments.

FIG. 10A is an energy-dispersive spectroscopy (EDS) image of a non-milled binder material undergoing homogenization.

FIG. 10B is an EDS image of an air milled binder material undergoing homogenization, according to some embodiments.

FIG. 10C is a data plot showing projected standard deviation vs. line speed of various air milled and non-milled binder materials, according to some embodiments.

FIG. 11A is a data plot showing the amount of attached and unattached fibrillized binders in weight % based on sieve size, according to some embodiments.

FIG. 11B is a scanning electron microscopy (SEM) image of a non-milled binder material on a stiff cathode, according to some embodiments.

FIG. 11C is an SEM image of an air milled binder material on a stiff cathode, according to some embodiments.

It will be clearly understood though, that the examples and figures are for illustrative purposes only, and are not necessarily restrictive of the scope of the present invention.

DETAILED DESCRIPTION

Although certain preferred embodiments and examples are disclosed below, the inventive subject matter extends beyond the specifically disclosed embodiments to other alternative embodiments and/or uses and to modifications and equivalents thereof. Thus, the scope of the claims appended hereto is not limited by any of the particular embodiments described below. For example, in any method or process disclosed herein, the acts or operations of the method or process may be performed in any suitable sequence and are not necessarily limited to any particular disclosed sequence. Various operations may be described as multiple discrete operations, in turn, in a manner that may be helpful in understanding certain embodiments; however, the order of description should not be construed to imply that these operations are order-dependent. Additionally, the structures, systems, and/or devices described herein may be embodied as integrated components or as separate components. For purposes of comparing various embodiments, certain aspects and advantages of these embodiments are described. Not necessarily all such aspects or advantages are achieved by any particular embodiment. Thus, for example, various embodiments may be carried out in a manner that achieves or optimizes one advantage or group of advantages as taught herein without necessarily achieving other aspects or advantages as may also be taught or suggested herein.

Systems and methods for processing an electrode film mixture using an air milling apparatus are described. Generally, an electrode film mixture may include mixing of an active material with a binder material. However, conventional systems and methods for processing an electrode film mixture may result in poor mixing material uniformity, metallic contamination, material damage, unwanted material agglomeration, and prolonged mixing cycle time. In addition, if binder particles are highly agglomerated or not attached to a bonding network, the electrode film may result in film defects (e.g., local differences in microstructure, density, film loading, decrease in electrochemical performance).

As such, a material (e.g., an electrode material) can be air milled in an air milling apparatus using a gas (e.g., temperature-controlled gas, pressurized chilled air) as the material is fed (e.g., gravity fed, pneumatically fed) into a mixing apparatus. The material may be distributed uniformly into the mixing apparatus by breaking down agglomerated particles and achieving an optimum particle size distribution (e.g., small and well distributed fibrillated binder materials).

In some embodiments, the material comprises an electrode material. In some embodiments, the electrode material comprises an active material (e.g., active electrode material, cathode active material, anode active material), a carbon material, a conductive additive, a binder material, and combinations thereof. In some embodiments, the materials may be in particle form (e.g., powder).

In some embodiments, binder materials are fibrillated or fibrillized in the air milling apparatus and/or mixing apparatus. In some embodiments, fibrillating in the air milling apparatus and/or mixing apparatus may help control particle size of the binder materials. Additionally, formulations of a high-density uniform electrode film mixtures including air milled materials (e.g., an air milled electrode material) may help create a sufficient binding network for improved mechanical strength and packing density during electrode fabrication. In some embodiments, the air milled material comprises an air milled electrode material. In some embodiments, the air milled electrode material comprises an air milled active material (e.g., air milled active electrode material, air milled cathode active material, air milled anode active material), an air milled carbon material, an air milled conductive additive, an air milled binder material, and combinations thereof.

In some embodiments, as a result of achieving an optimum particle size distribution for electrode materials, the electrode film mixture used to form electrode films, electrodes, and energy storage devices may have improved electrochemical and/or mechanical properties. Effective distribution and utilization of the materials may allow for maximal use of inactive additives in electrode fabrication and thus, more of the active ingredients may be used to achieve improved electrode mechanical properties. The effective distribution of the materials also may aid in improving the energy density and cost basis ($/kWh) of an electrode assembly. Additionally, fabricating an electrode with uniformly distributed additives may improve electrochemical performance, for example by reducing pathways for lithium-ion transport and contribute to hot spots, lithium plating, and reduced cycle life. Furthermore, during the electrode film fabrication processes, high localized additive concentrations may negatively affect the mechanical and thermal properties of the electrode film and may cause further defects such as roll build-up and pullouts.

Air milling also allows for temperature control of the materials, thereby controlling agglomeration of the material to itself and other additive particles within the mixing apparatus.

In some embodiments, the material particle size and morphology can be adjusted by changing the motive pressure (e.g., the velocity of the fluid) which corresponds to the milling force of the air milling apparatus. In some embodiments, the air milling apparatus may be modified based on certain fluid and particle trajectories. Modifying material particle size and other elements of the air milling apparatus may improve mixing uniformity and prevent unwanted particle agglomeration.

Air Milling Apparatus and Mixing Apparatus

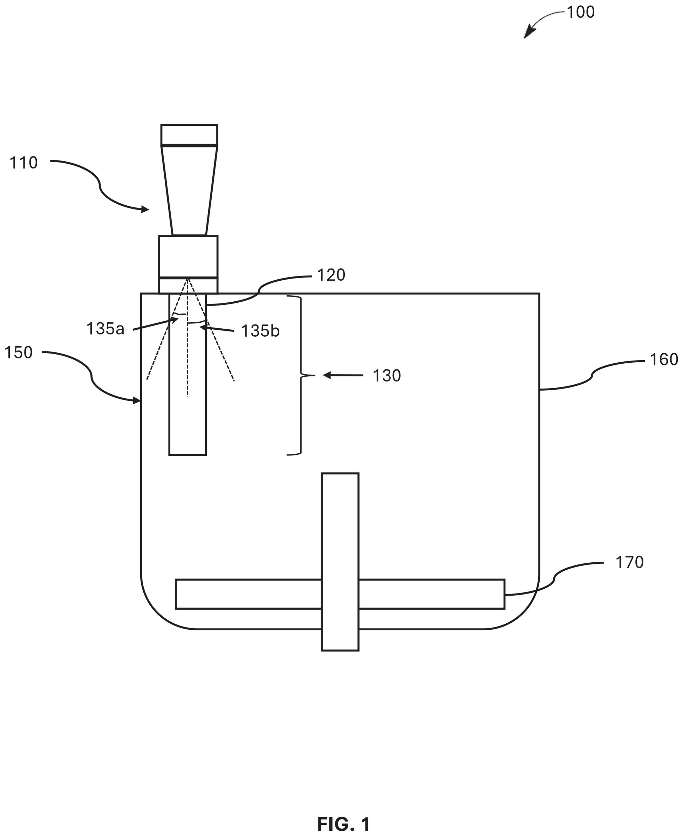

FIG. 1 is a schematic illustration of a processing system including an air milling apparatus and a mixing apparatus. As illustrated in FIG. 1, a processing system 100 includes an air milling apparatus 110 that includes a pressurization insert 120, and a mixing apparatus 150 that includes a mixer or mixing chamber 160 and a mixing blade 170. The air milling apparatus 110 is attached directly to a top portion of the mixing apparatus 150, wherein the pressurization insert 120 is positioned within the mixing apparatus 150 and such that the milling apparatus 110 is in fluid communication with the mixing apparatus 150. The pressurization insert 120 includes a bottom insert length 130 and injection angles 135a, 135b. A top portion (not shown) of the pressurization insert 120 is positioned within the air milling apparatus 110 and a bottom portion of the pressurization insert 120 is positioned within the mixing chamber 160. The bottom portion of the pressurization insert 120 includes a bottom insert length 130 that can reach towards a floor of the mixing chamber 160 or where the mixing blade 170 is positioned. The injection angles 135a, 135b are associated with the bottom insert length 130 such that a change in the bottom insert length 130 will affect the injection angles 135a, 135b.

In some embodiments, the air milling apparatus is attached, connected and/or in fluid communication with the mixing apparatus. In some embodiments, the air milling apparatus is or may be detached or disconnected from the mixing apparatus. In some embodiments, the pressurization insert is configured to be attached between the air milling apparatus and the mixing apparatus. In some embodiments, a shape of the pressurization insert may be configured to air mill the material to form an air milled material when the air mill is in use. In some embodiments, the shape of the pressurization insert is configured to augment a particle size distribution of the material milled by the milling apparatus. In some embodiments, the shape of the pressurization insert may be used to augment a gas flow rate, material flow rate, and/or a pressure range within the air milling apparatus. In some embodiments, the pressurization insert may be removably coupled such that it can be detached and/or replaced with a differently shaped pressurization insert which may be attached, connected and/or in fluid communication with the mixing apparatus based on the air milling requirements.

In some embodiments, a processing system includes an inline connection between the milling apparatus and the mixing apparatus such that the milling apparatus is in fluid communication with the mixing apparatus.

In some embodiments, the mixing apparatus may be a fluidized bed mixing apparatus. In some embodiments, the fluidized bed mixing apparatus includes a fluidizing medium inlet comprising a fluidizable medium (e.g., fluidizable materials). In some embodiments, the fluidizable medium is sprayed or mixed into the mixing chamber. In some embodiments, the fluidizable medium is fluidized in the mixing chamber. In some embodiments, the fluidized bed mixing apparatus is configured to suspend active material precursor particles within a fluidizable medium gravitationally and/or by recirculation of the fluidizable medium. In some embodiments, the fluidizable medium is fluidized by a gas, such as air or nitrogen, and/or a liquid, such as water or a solvent.

In some embodiments, the mixing apparatus may include one or more mixing chambers. In some embodiments, the mixing apparatus may include a material diverter valve to allow air milled materials to flow between the one or more mixing chambers. In some embodiments, the mixing apparatus may include an air separator to divert gas between the one or more mixing chambers. In some embodiments, the mixing apparatus may include an air filter to prevent any gas buildup in the one or more mixing chambers.

In some embodiments, the mixing chamber may include a number of mixing blades. In some embodiments, the mixing chamber may further include a deflector. In some embodiments, the mixing blade are configured to rotate in a clockwise direction or counterclockwise direction. In some embodiments, the mixer and/or mixing chamber is a high-shear mixer and/or mixing chamber. In some embodiments, the mixer and/or mixing chamber is a low-shear mixer and/or mixing chamber. In some embodiments, the mixing chamber includes an exhaust port to remove gas in the mixing chamber. In some embodiments, the exhaust port is attached, connected and/or in fluid communication with the mixing apparatus. In some embodiments, the exhaust port is or may be detached or disconnected from the mixing apparatus. In some embodiments, the exhaust port enables materials to remain in the mixing chamber to prevent from short circuiting to the exhaust port and to prevent exceeding the maximum allowable pressure in the mixing chamber. In some embodiments, the mixing chamber includes a tangential gas inlet to help air milled materials to be mixed in the mixing chamber.

In some embodiments, the injection angle may be positive (e.g., greater than about 0°). In some embodiments, the injection angle may be less than about 90°. In some embodiments, the injection angle is, is about, is at most, or is at most about, 1°, 5°, 10°, 15°, 20°, 25°, 30°, 35°, 40°, 45°, 50°, 55°, 60°, 65°, 70°, 75°, 80°, 85° or 90°, or any range of values therebetween. In some embodiments, the injection angle may be negative (e.g., less than about 0°). In some embodiments, the injection angle may be about -90°. In some embodiments, the injection angle is, is about, is at least, or is at least about, -1°, -5°, -10°, -15°, -20°, -25°, -30°, -35°, -40°, -45°, -50°, -55°, -60°, -65°, -70°, -75°, -80°, -85° or -90°, or any range of values therebetween.

The bottom insert length may be referred to as a travel distance between the air milling chamber and the mixing chamber. In some embodiments, the injection angle and/or the travel distance may have an effect on particle size distribution. In some embodiments, the bottom insert length can be configured such that the injection angle corresponds to the travel distance. In some embodiments, a longer bottom insert length may decrease the injection angle. In some embodiments, a shorter bottom insert length may increase the injection angle. In some embodiments, the bottom insert length is, is about, is at least, or is at least about, 10 cm, 11 cm, 12 cm, 13 cm, 14 cm, 15 cm, 16 cm, 17 cm, 18 cm, 19 cm, 20 cm, 21 cm, 22 cm, 23 cm, 24 cm, 25 cm, 26 cm, 27 cm, 28 cm, 29 cm, 30 cm, 31 cm, 32 cm, 33 cm, 34 cm, 35 cm, 36 cm, 37 cm, 38 cm, 39 cm or 40 cm, or any range of values therebetween.

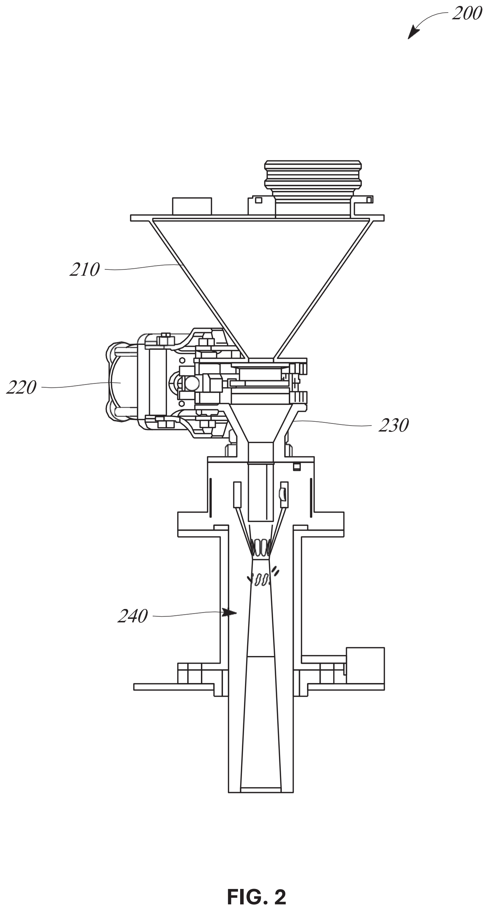

FIG. 2 is a schematic illustration of an air milling apparatus. As illustrated in FIG. 2, the air milling apparatus 200 includes a hopper 210 (i.e., funnel), an inlet valve 220, a material dispenser 230, and a pressurization insert 240. The hopper 210 is in fluid communication with an inlet valve 220 providing an open or close entry to the material dispenser 230. The material dispenser 230 is positioned between the inlet valve 220 and the pressurization insert 240. The hopper 210, the inlet valve 220, the material dispenser 230, and the pressurization insert 240 are in fluid communication with each other.

In some embodiments, the hopper may comprise a suction air supply, wherein the suction air supply provides low friction roughness on a surface of the hopper. In some embodiments, the suction air supply may comprise a permeable metal for fluidization where gas flow directs materials through the hopper. In some embodiments, the pressurization insert is detachable from the material dispenser, inlet valve, and/or the funnel. In some embodiments, the material valve and/or the material dispenser may be detachable from the air milling apparatus. In some embodiments, a center of the material dispenser is configured to be off-centered from a center of the air milling chamber to prevent short circuiting. In some embodiments, the material dispenser includes a dispenser valve to prevent positive pressure and/or reverse flow.

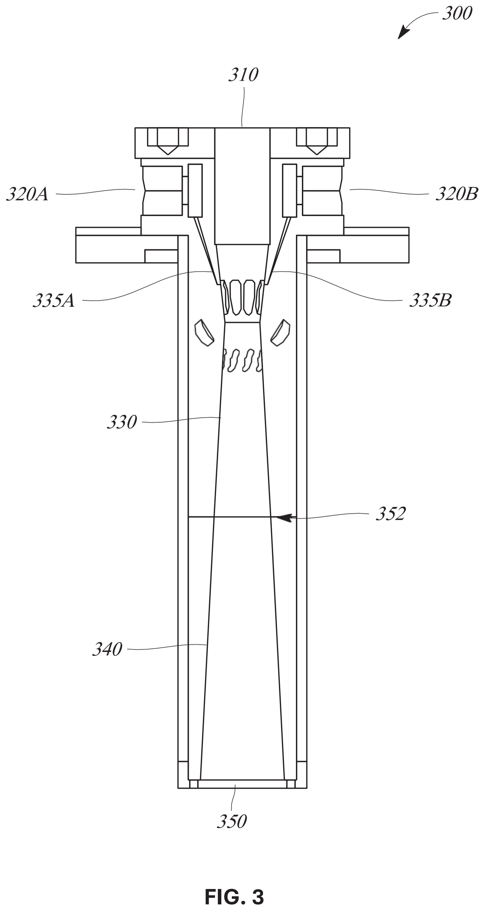

FIG. 3 is a schematic illustration of a portion of an air milling apparatus. As illustrated in FIG. 3, a portion of an air milling apparatus 300 includes a portion of the material dispenser 310, gas inlets 320A, 320B, a pressurization insert 325, a top portion of the pressurization insert or an air milling chamber 330, gas outlets 335A, 335B, and a bottom portion of the pressurization insert or an outlet 340. The outlet 340 further includes a dispersion nozzle 350. The outlet 340 is attached or connected to the air milling chamber 330 such that the outlet 340 extends into the mixing apparatus. The portion of the material dispenser 310, the air milling chamber 330, and the outlet 340 are in fluid communication with each other. The gas inlets 320A, 320B are in fluid communication with the air milling chamber 330 such that the gas inlets 320A, 320B supply gas into the air milling chamber 330 through gas outlets 335A, 335B, respectively. The gas outlets 335A, 335B act as channels for gas flowing from the gas inlets 320A, 320B into the air milling chamber 330.

In some embodiments, the air milling apparatus may include one or more gas inlets. In some embodiments, the air milling apparatus may include one or more gas outlets. In some embodiments, the gas outlets may include an air plenum to help control gas flow. In some embodiments, the air plenum comprises a high cross-sectional chamber producing flow of gases at low velocities. In some embodiments, the air plenum produces a pressure drop within the high cross-sectional chamber. In some embodiments, the gas outlets may further include a gas nozzle. In some embodiments, the gas nozzle is a sonic or supersonic gas nozzle having a converging flow of gases with velocities at or above a speed of sound. In some embodiments, the nozzle may provide a spiral flow profile of gases, increasing particle to particle collisions and creating a uniform velocity profile. In some embodiments, the nozzle may provide a non-spiral (e.g., straight-line) flow profile of gases, creating a non-uniform velocity profile. In some embodiments, the gas inlets may include a gas valve for allowing and preventing gas to flow into the air milling chamber. In some embodiments, the air milling apparatus may include a gas flow controller. In some embodiments, the dispersion nozzle may be detached from the air milling apparatus. In some embodiments, the air milling chamber includes a chamber outlet, controlling gases entering the pressurization insert.

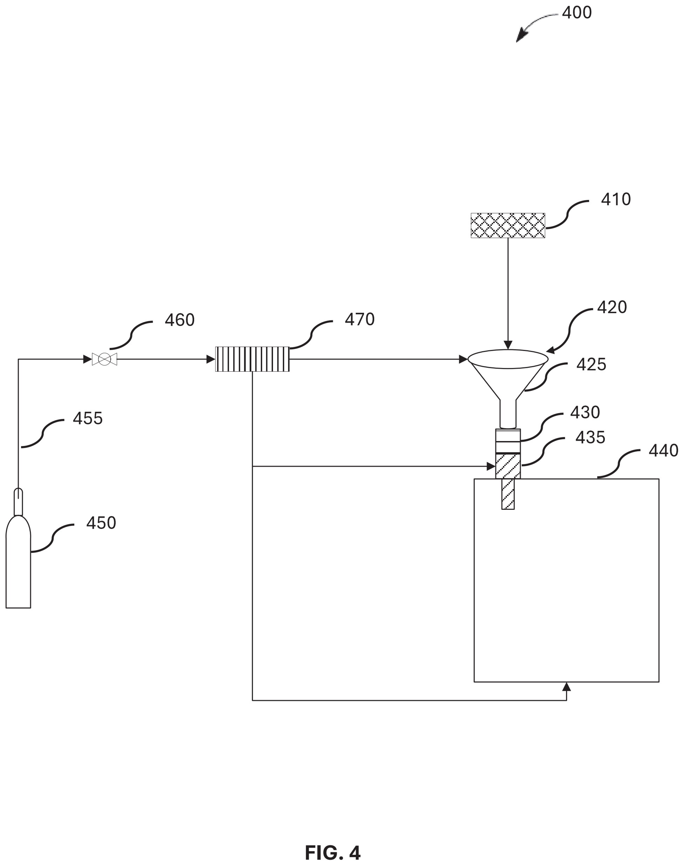

FIG. 4 is a schematic flow diagram of an air milling apparatus and a mixing apparatus for processing an electrode film mixture. As illustrated in FIG. 4, a flow process 400 includes a material dispenser 410 that provides materials to feed into an air milling apparatus 420. The air milling apparatus 420 includes a hopper 425, an inlet valve 430, and a pressurization insert 435. The materials flow through the air milling apparatus 420 into a mixing apparatus 440. The flow process 400 further includes a pressurized tank 450 which is in fluid communication with a pressure regulating valve 460. The pressurized tank 450 provides a gas stream 455 to the pressure regulating valve 460. The pressure regulating valve 460 is in fluid communication with an air processing element 470. The air processing element 470 is configured to control the flow rate, temperature, and pressure of the gas flowing from the pressurized tank 450. The air processing element 470 is in further fluid communication with an air milling apparatus 420, pressurization insert 435, and a mixing apparatus 440, respectively.

In some embodiments, the flow process may include one or more pressurized tanks. In some embodiments, the pressurized tank comprises a gas selected from the group consisting of hydrogen gas, nitrogen gas, argon gas, oxygen gas and combinations thereof. In some embodiments, the flow process may include one or more air processing elements. In some embodiments, the air processing element may include a gas flow rate controller, a temperature controller, and/or pressure controller. In some embodiments, the air processing element may be in fluid communication with one or more elements of the milling apparatus. In some embodiments, the air processing element may be in fluid communication with one or more of elements of the mixing apparatus. In some embodiments, the gas stream may comprise pressurized chilled air and/or temperature-controlled gas. In some embodiments, the gas stream may act as a suction gas stream (e.g., gas is directed out the air milling apparatus into the mixing apparatus) and/or a motive gas stream (e.g., gas is directed into the air milling apparatus). In some embodiments, the gas is provided to the air milling apparatus for the purposes of air milling the material and/or to the mixing apparatus to fluidize the material in the mixing apparatus. In some embodiments, the gas provided to the mixing apparatus along with the mixing blade fluidizes the material in the mixing apparatus.

Method of Air Milling and Mixing

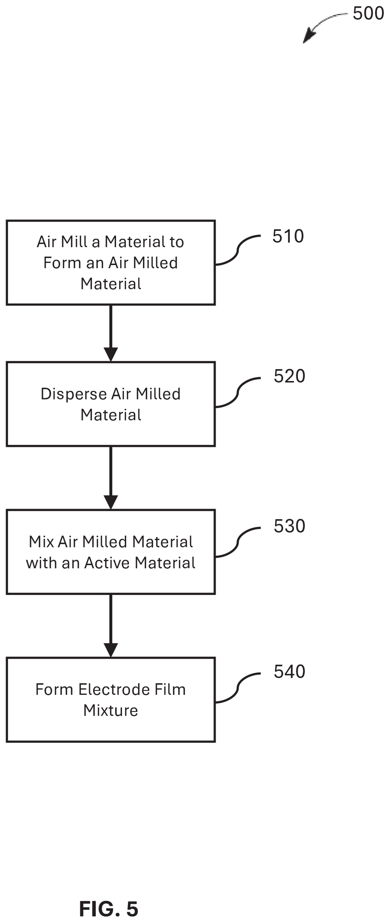

The methods described may be utilized in the relevant systems and apparatuses described throughout. FIG. 5 is a flowchart showing a method 500 of processing an electrode film mixture including air milling. As illustrated in FIG. 5, a material is air milled to form an air milled material in step 510. In step 520, the air milled material is dispersed into a mixer (e.g., a mixing chamber) and in step 530, the air milled material is mixed with an active material in the mixer (e.g., a mixing chamber) to form an electrode film mixture in step 540.

In some embodiments, processing an electrode film mixture may include gravity feeding the air milled material into the mixing chamber. In some embodiments, processing an electrode film mixture may include pneumatically feeding the air milled material into the mixing chamber. In some embodiments, the air milled material may be pneumatically fed into one or more mixing chambers.

In some embodiments, materials may be preprocessed prior to air milling. In some embodiments, preprocessing may include a cooling process to increase the brittleness of the material and/or a heating process to melt or soften the material. In some embodiments, the preprocessing may include premixing the material with other solid or liquid additives that can make it easier to mill and disperse the material. In some embodiments, the preprocessing may include coating the active material with a carbon material prior to dispersing or mixing.

In some embodiments, the preprocessing may be operated at a preprocessing temperature of, of about, of at most, or of at most about, -200°C, -150°C, - 100°C, -50°C, -25°C, -10°C, -5°C, 0°C, 10°C, 15°C, 20°C, 35°C, 40°C, 45°C, 50°C, 55°C, 60°C, 65°C, 70°C, 75°C, 80°C, 85°C, 90°C, 95°C, 100°C, 120°C, 140°C, 160°C, 180°C, 200°C, 220°C, 240°C, 260°C, 280°C, 300°C, 320°C, 340°C, 360°C, 380°C or 400°C, or any range of values therebetween. In some embodiments, the preprocessing may include temperature controlling the material to a temperature of about -200-300°C. In some embodiments, the material is melted to achieve a small particle size without a use of a solvent. In some embodiments, a lower preprocessing temperature (e.g., less than about 5°C) may form a more brittle material compared to a higher preprocessing temperature. In some embodiments, the lower preprocessing temperature may form binder materials that are less prone to fibrillization, reducing particle size of the material.

In some embodiments, mixing the air milled material and the active material in the mixing chamber may be at a mixing temperature of, of about, of at most, or of at most about, 15°C, 16°C, 17°C, 18°C, 19°C, 20°C, 21°C, 22°C, 23°C, 24°C, 25°C, 26°C, 27°C, 28°C, 29°C or 30°C, or any range of values therebetween.

In some embodiments, air milling may be at a gauge pressure of, of about, of at most, or of at most about, 0 atm, 0.1 atm, 0.2 atm, 0.3 atm, 0.4 atm, 0.5 atm, 0.6 atm, 0.7 atm, 0.8 atm, 0.9 atm, 1 atm, 2 atm, 3 atm, 4 atm or 5 atm, or any range of values therebetween.

In some embodiments, air milling may include applying temperature-controlled gas to the material at a temperature of, of about, of at most, or of at most about, - 200°C, -150°C, -100°C, -50°C, -25°C, -10°C, -5°C, 0°C, 1°C, 2°C, 3°C, 4°C, 5°C, 6°C, 7°C, 8°C, 9°C, 10°C, 11°C, 12°C, 13°C, 14°C, 15°C, 16°C, 17°C, 18°C, 19°C, 20°C, 21°C, 22°C, 23°C, 24°C, 25°C, 26°C, 27°C, 28°C, 29°C or 30°C, or any range of values therebetween. In some embodiments, air milling may include applying temperature-controlled gas to the material providing a velocity of, of about, of at least, or of at least about, 0 m/s, 5 m/s, 10 m/s, 15 m/s, 20 m/s, 25 m/s, 30 m/s, 35 m/s, 40 m/s, 45 m/s, 50 m/s, 55 m/s, 60 m/s, 65 m/s, 70 m/s, 75 m/s, 80 m/s, 85 m/s, 90 m/s, 95 m/s, 100 m/s, 110 m/s, 120 m/s, 130 m/s, 140 m/s, 150 m/s, 160 m/s, 170 m/s, 180 m/s, 190 m/s, 200 m/s, 210 m/s, 220 m/s, 230 m/s, 240 m/s, 250 m/s, 260 m/s, 270 m/s, 280 m/s, 290 m/s, 300 m/s, 310 m/s, 320 m/s, 330 m/s, 340 m/s, 350 m/s, 360 m/s, 370 m/s, 380 m/s, 390 m/s, 400 m/s, 410 m/s, 420 m/s, 430 m/s, 440 m/s, 450 m/s, 460 m/s, 470 m/s, 480 m/s, 490 m/s or 500 m/s, or any range of values therebetween. In some embodiments, the temperature-controlled gas may include a gas selected from the group consisting of hydrogen gas, nitrogen gas, argon gas, oxygen gas and combinations thereof.

In some embodiments, the material may include a $D_{50}$ average particle size distribution of, or of about, 40 $\mu$m, 50 $\mu$m, 60 $\mu$m, 70 $\mu$m, 80 $\mu$m, 90 $\mu$m, 100 $\mu$m, 110 $\mu$m, 120 $\mu$m, 130 $\mu$m, 140 $\mu$m, 150 $\mu$m, 160 $\mu$m, 170 $\mu$m, 180 $\mu$m, 190 $\mu$m, 200 $\mu$m, 210 $\mu$m, 220 $\mu$m, 230 $\mu$m, 240 $\mu$m, 250 $\mu$m, 260 $\mu$m, 270 $\mu$m, 280 $\mu$m, 290 $\mu$m, 300 $\mu$m, 310 $\mu$m, 320 $\mu$m, 330 $\mu$m, 340 $\mu$m, 350 $\mu$m, 360 $\mu$m, 370 $\mu$m, 380 $\mu$m, 390 $\mu$m, 400 $\mu$m, 410 $\mu$m, 420 $\mu$m, 430 $\mu$m, 440 $\mu$m, 450 $\mu$m, 460 $\mu$m, 470 $\mu$m, 480 $\mu$m, 490 $\mu$m or 500 $\mu$m, or any range of values therebetween. In some embodiments, the air milled material may include a $D_{50}$ average particle size distribution of, or of about, 1 $\mu$m, 5 $\mu$m, 10 $\mu$m, 15 $\mu$m, 20 $\mu$m, 25 $\mu$m, 30 $\mu$m, 35 $\mu$m, 40 $\mu$m, 45 $\mu$m, 50 $\mu$m, 55 $\mu$m or 60 $\mu$m, or any range of values therebetween. In some embodiments, the air milled material includes a $D_{50}$ average particle size distribution of less than about 30 $\mu$m.

In some embodiments, the material is a binder material. In some embodiments, the air milled material is an air milled binder material. In some embodiments, the binder material (e.g., a binder, a fibrillizable binder, a fibrillized binder) includes a $D_{50}$ average particle size distribution between 40 $\mu$m and 500 $\mu$m. In some embodiments, the binder material may include a $D_{50}$ average particle size distribution of, or of about, 40 $\mu$m, 50 $\mu$m, 60 $\mu$m, 70 $\mu$m, 80 $\mu$m, 90 $\mu$m, 100 $\mu$m, 110 $\mu$m, 120 $\mu$m, 130 $\mu$m, 140 $\mu$m, 150 $\mu$m, 160 $\mu$m, 170 $\mu$m, 180 $\mu$m, 190 $\mu$m, 200 $\mu$m, 210 $\mu$m, 220 $\mu$m, 230 $\mu$m, 240 $\mu$m, 250 $\mu$m, 260 $\mu$m, 270 $\mu$m, 280 $\mu$m, 290 $\mu$m, 300 $\mu$m, 310 $\mu$m, 320 $\mu$m, 330 $\mu$m, 340 $\mu$m, 350 $\mu$m, 360 $\mu$m, 370 $\mu$m, 380 $\mu$m, 390 $\mu$m, 400 $\mu$m, 410 $\mu$m, 420 $\mu$m, 430 $\mu$m, 440 $\mu$m, 450 $\mu$m, 460 $\mu$m, 470 $\mu$m, 480 $\mu$m, 490 $\mu$m or 500 $\mu$m, or any range of values therebetween. In some embodiments, the air milled binder material (e.g., an air milled binder, an air milled fibrillizable binder, an air milled fibrillized binder) material may include a $D_{50}$ average particle size distribution of, or of about, 1 $\mu$m, 5 $\mu$m, 10 $\mu$m, 15 $\mu$m, 20 $\mu$m, 25 $\mu$m, 30 $\mu$m, 35 $\mu$m, 40 $\mu$m, 45 $\mu$m, 50 $\mu$m, 55 $\mu$m or 60 $\mu$m, or any range of values therebetween. In some embodiments, the air milled binder material includes a $D_{50}$ average particle size distribution of less than about 30 $\mu$m.

In some embodiments, the size of the components and/or particles of the electrode film mixture may be reduced by air milling and/or using high-shear equipment and processes. In some embodiments, the size of the components and/or particles of the electrode film mixture may be reduced by air milling and/or using non-destructive (e.g., low-shear) equipment and processes. The high-shear or low-shear forces can be provided to separate the material which agglomerates into finely divided particles and/or fibrillize the material, such that the material can coat the other electrode film components. In some embodiments, the resulting processed electrode film mixture (e.g., powder) may be compressed with heat and pressure using a roll mill to form a film, such as by the material cohering and adhering to other components of the film, for example, in a fibrillized matrix.

In some embodiments, the electrode film mixture may be formed by mixing components of a composite material (e.g., a carbon additive and an active material; a carbon additive, an active material and a binder; or a carbon additive, a carbon active material and a binder) with or without a liquid. In some embodiments, the binder or binder material may include an air milled binder, an air milled fibrillizable binder, an air milled fibrillized binder. In some embodiments, the liquid may comprise an aqueous solvent and/or an organic solvent. In some embodiments, the liquid may comprise water. In some embodiments, the components of the electrode film mixture (e.g., the carbon additive, active material, binder, and liquid) may be substantially homogenously mixed and/or distributed in the mixture. In some embodiments, the electrode film material mixture may be substantially free of solvent residue.

In some embodiments, the carbon additive may be deagglomerated and uniformly coated on an active particle surface. In some embodiments, uniformly coating an active particle surface with the carbon additive may improve electrical conductivity of an electrode, increase surface energy attraction between the carbon additive and the binder, and improve packing density of the carbon additive particles.

In some embodiments, the electrode film mixture may be formed by mixing a mixture comprising a carbon additive and a binder with a carbon active material. In some embodiments, the binder material or binder may consist essentially of a single binder. In some embodiments, the binder material may be selected from the group consisting of polyvinylidene fluoride (PVDF), polytetrafluoroethylene (PTFE), co-polymers thereof and combinations thereof. In some embodiments, the conductive additive is activated carbon. In some embodiments, the mixture may comprise an additional silicon active material. In some embodiments, the mixture may comprise a carbon additive of, or of about, 0.1 wt.%, 0.2 wt.%, 0.3 wt.%, 0.4 wt.%, 0.5 wt.%, 0.6 wt.%, 0.7 wt.%, 0.8 wt.%, 0.9 wt.%, 1.0 wt.%, 1.1 wt.%, 1.2 wt.%, 1.5 wt.%, 2 wt.%, 2.5 wt.%, 3 wt.%, 3.5 wt.% or 4 wt.% or any range of values therebetween, for example, from about 0.1 wt.% to about 4 wt.%, wherein the wt.% is based on the weight of mixture.

In some embodiments, the mixture may comprise a binder of, or of about, 0.5 wt.%, 1 wt.%, 1.5 wt.%, 2 wt.%, 2.5 wt.%, 3 wt.%. 3.5 wt.%, 4 wt.%, 4.5 wt.%, 4.9 wt.%, 5 wt.%, 5.5 wt.%, 6 wt.%, 6.5 wt.%, 7 wt.%, 7.5 wt.%, 8 wt.%, 8.5 wt.%, 9 wt.%, 9.5 wt.% or 10 wt.% or any range of values therebetween, for example, from about 0.5 wt.% to about 10 wt.%, wherein the wt.% is based on the weight of mixture.

In some embodiments, the electrode film mixture may be formed by mixing the mixture (e.g., wherein the mixture may comprise a carbon additive, a binder and a carbon active material) using a mixing apparatus for a certain period of time. In some embodiments, a mixing time in the mixing chamber may be, or may be about, 200 seconds, 250 seconds, 300 seconds, 350 seconds, 365 seconds, 400 seconds, 450 seconds, 500 seconds, 550 seconds or 600 seconds or any range of values therebetween, for example, from about 200 seconds to about 600 seconds. In some embodiments, the mixing in the mixing chamber may be performed more than once, such as twice, three times, four times, five times, six times, or any times needed. In some embodiments, a speed of the mixing in the mixing chamber may be, or may be about, 500 rpm, 600 rpm, 700 rpm, 750 rpm, 800 rpm, 850 rpm, 900 rpm, 1000 rpm, 1100 rpm, 1200 rpm, 1300 rpm, 1400 rpm or 1500 rpm, or any range of values therebetween, for example, from about 500 rpm to about 1500 rpm. In some embodiments, the mixing blade in the mixing chamber may include a tip speed ranging from about 10 meters/min to about 40 meters/min.

In some embodiments, after the electrode film mixture is formed, the electrode film mixture may be further diluted. In some embodiments, diluting the electrode film mixture may comprise diluting the electrode film mixture to achieve a solid content of, or of about, 20 wt.%, 25 wt.%, 30 wt.%, 35 wt.%, 40 wt.%, 45 wt.%, 50 wt.%, 55 wt.% or 60 wt.%, or any range of values therebetween, for example, between about 20 wt.% to about 60 wt.%, wherein the wt.% is based on the weight of the electrode film mixture. In some embodiments, diluting the electrode film mixture may comprise diluting the electrode film mixture to achieve a viscosity of, of about, of less than, or of less than about, 500 cp, 450 cp, 400 cp, 350 cp, 300 cp, 250 cp, 200 cp, 150 cp or 100 cp or any range of values therebetween, for example, from about 100 cp to about 500 cp. In some embodiments, the dilution may be achieved by using a mixing apparatus.

Electrode Film Materials and Electrode Films

An electrode film mixture and electrode films formed using materials and/or air milled materials are described herein. In some embodiments, components of an active layer or electrode film may comprise particles, such as a composite material. The particles for forming the active layer or electrode film may be combined with a material and/or air milled material to provide an electrode film mixture. In some embodiments, the active layer or electrode film may be formed from the electrode film mixture such that weight percentages of the components of the active layer or electrode film and weight percentages of the components of the electrode film mixture are substantially the same.

An active material (e.g., cathode active material, anode active material) may be used in the preparation of an electrode film and/or electrode for an energy storage device.

In some embodiments, the active material is a cathode active material. In some embodiments, the cathode active material is selected from at least one of a metal oxide, metal sulfide, a sulfur-carbon composite, a lithium metal oxide, and a material including sulfur. In some embodiments, the cathode active material is selected from lithium iron phosphate (i.e., $LiFePO_4$ or "LFP"), lithium manganese iron phosphate (e.g., $LiMn_{0.6}Fe_{0.4}PO_4$ or "LMFP"), lithium nickel manganese cobalt oxide (i.e., $LiNi_xMn_yCo_{1-x-y}O_2$ or "NMC"), lithium nickel cobalt aluminum oxide (i.e., $LiNi_xCo_yAl_zO_2$ or "NCA"), lithium manganese oxide ("LMO"), lithium nickel manganese oxide ("LNMO"), lithium cobalt oxide ("LCO"), lithium titanate ("LTO"), or combinations thereof. In some embodiments, the cathode active material includes at least two of LFP, LMFP, NMC, NCA, LMO, LNMO, LCO, LTO, and combinations thereof. In some embodiments, the cathode active material is an iron phosphate-based active material. In some embodiments, iron phosphate-based active materials include $LiFePO_4$ (i.e., "lithium iron phosphate" and "LFP") and $LiMn_{1-x}Fe_xPO_4$ (i.e., "lithium manganese iron phosphate" and "LMFP") (e.g., $LiMn_{0.6}Fe_{0.4}PO_4$ or $LiMn_{0.8}Fe_{0.2}PO_4$). In some embodiments, the iron phosphate-based active material includes LFP. In some embodiments, the iron phosphate-based active material includes an LMFP. In some embodiments, the iron phosphate-based active material includes an LFP and/or an LMFP.

In some embodiments, the active material is an anode active material. In some embodiments, anode active materials can include, for example, an insertion material (such as carbon, graphite, and/or graphene), an alloying/dealloying material (such as silicon, silicon oxide, tin, and/or tin oxide), a metal alloy or compound (such as Si-Al, and/or Si-Sn), and/or a conversion material (such as manganese oxide, molybdenum oxide, nickel oxide, and/or copper oxide). The anode active materials can be used alone or mixed together to form multi-phase materials (such as Si-C, Sn-C, SiOx-C, SnOx-C, Si-Sn, Si-SiOx, Sn-SnOx, Si-SiOx-C, Sn-SnOx-C, Si-Sn-C, SiOx-SnOx-C, Si-SiOx-Sn, or Sn-SiOx-SnOx.). Anode active materials include common natural graphite, synthetic or artificial graphite, surface modified graphite, spherical-shaped graphite, flake-shaped graphite and blends or combinations of these types of graphite, metallic elements and its compound as well as metal-C composite for anode.

In some embodiments, the electrode film mixture and/or electrode film comprises the active material in an amount of, of about, of at least, or at least about, 70 wt.%, 75 wt.%, 80 wt.%, 85 wt.%, 86 wt.%, 87 wt.%, 88 wt.%, 89 wt.%, 90 wt.%, 91 wt.%, 92 wt.%, 93 wt.%, 94 wt.%, 95 wt.%, 96 wt.%, 97 wt.%, 98 wt.%, 98.5 wt.%, 99 wt.%, 99.5 wt.%, 99.8 wt.% or 99.9 wt.%, or any range of values therebetween.

In some embodiments, the electrode film mixture and/or electrode film comprises a carbon material configured to reversibly intercalate lithium ions. In some embodiments, the lithium intercalating carbon is selected from a graphitic carbon, graphite, hard carbon, soft carbon and combinations thereof. For example, the electrode film mixture and/or electrode film of the electrode can include a binder material, one or more of graphitic carbon, graphite, graphene-containing carbon, hard carbon and soft carbon, and an electrical conductivity promoting material. In some embodiments, an electrode is mixed with lithium metal and/or lithium ions. In some embodiments, the electrode comprises the carbon material in a total amount of, of about, of at most, or at most about, 20 wt.%, 15 wt.%, 10 wt.%, 9 wt.%, 8 wt.%, 7 wt.%, 6 wt.%, 5 wt.%, 4 wt.%, 3 wt.%, 2 wt.%, 1 wt.%, or any range of values therebetween.

In some embodiments, electrode film mixture and/or electrode film includes a conductive additive. In some embodiments, the conductive additive may comprise a conductive carbon additive, such as a carbon black. In some embodiments, the conductive additive may comprise a conductive carbon additive. In some embodiments, the conductive carbon additive comprises carbon black, carbon nanotubes, such as single-walled carbon nanotubes (SWCNTs) and multi-walled carbon nanotubes (MWCNTs). In some embodiments, the electrode film mixture and/or electrode film comprises the conductive additive in a total amount of, of about, of at most, or at most about, 10 wt.%, 9 wt.%, 8 wt.%, 7 wt.%, 6 wt.%, 5 wt.%, 4 wt.%, 3 wt.%, 2 wt.%, 1 wt.%, 0.5 wt.%, 0.25 wt.%, 0.1 wt.%, or any range of values therebetween. In some embodiments, each of the conductive additive is in an amount of, of about, of at most, or at most about, 10 wt.%, 9 wt.%, 8 wt.%, 7 wt.%, 6 wt.%, 5 wt.%, 4 wt.%, 3 wt.%, 2 wt.%, 1 wt.%, 0.5 wt.%, 0.25 wt.%, 0.1 wt.%, of the electrode film mixture and/or electrode film, or any range of values therebetween. In some embodiments, the conductive additive is carbon black.

In some embodiments, the electrode film mixture and/or electrode film includes a binder or binder material. In some embodiments, binders can include polytetrafluoroethylene (PTFE), a polyolefin, polyalkylenes, polyethers, styrene-butadiene, co-polymers of polysiloxanes and polysiloxane, branched polyethers, polyvinylethers, a carboxymethylcellulose (CMC), co-polymers thereof, and/or combinations thereof. In some embodiments, the polyolefin can include polyethylene (PE), polypropylene (PP), polyvinylidene fluoride (PVDF), co-polymers thereof, and/or combinations thereof. For example, the binder can include polyvinylene chloride, poly(phenylene oxide) (PPO), polyethylene-block-poly(ethylene glycol), poly(ethylene oxide) (PEO), poly(phenylene oxide) (PPO), polyethylene-block-poly(ethylene glycol), polydimethylsiloxane (PDMS), polydimethylsiloxane-coalkylmethylsiloxane, co-polymers thereof, and/or combinations thereof. In some embodiments, the binder may include a thermoplastic. In some embodiments, the binder comprises a fibrillizable and/or fibrillized polymer. In certain embodiments, the binder comprises, consists essentially, or consists of a single fibrillizable and/or fibrillized binder, such as PTFE. In some embodiments, the electrode film mixture and/or electrode film includes, includes about, includes at most, or includes at most about, 1 wt.%, 2 wt.%, 3 wt.%, 4 wt.%, 5 wt.%, 6 wt.%, 7 wt.%, 8 wt.%, 9 wt.%, 10 wt.%, or any range of values therebetween, of a binder.

In some embodiments, the electrode film can be a wet processed electrode film. In some embodiments, the electrode film is prepared by a wet or slurry-based electrode fabrication process. In some embodiments, the electrode film of the present disclosure can be a dry processed electrode film. In some embodiments, the electrode film is prepared by a dry electrode fabrication process. As used herein, a dry electrode fabrication process can refer to a process in which no or substantially no solvents are used to form a dry electrode film. For example, components of the active layer or electrode film, including carbon materials and binders, may comprise, consist of, or consist essentially of dry particles. The dry particles for forming the active layer or electrode film may be combined to provide a dry particle active layer mixture. In some embodiments, the active layer or electrode film may be formed from the dry particle active layer mixture such that weight percentages of the components of the active layer or electrode film and weight percentages of the components of the dry particles active layer mixture are substantially the same. In some embodiments, the active layer or electrode film formed from the dry particle active layer mixture using the dry fabrication process may be free from, or substantially free from, any processing additives such as solvents and solvent residues resulting therefrom. In some embodiments, the resulting active layer or electrode films are self-supporting films formed using the dry process from the dry particle mixture. In some embodiments, the resulting active layer or electrode films are free-standing films formed using the dry process from the dry particle mixture. A process for forming an active layer or electrode film can include fibrillizing the fibrillizable binder component(s) such that the film comprises fibrillized binder. In further embodiments, a free-standing active layer or electrode film may be formed in the absence of a current collector. In still further embodiments, an active layer or electrode film may comprise a fibrillized polymer matrix such that the film is self-supporting. It is thought that a matrix, lattice, or web of fibrils can be formed to provide mechanical structure to the electrode film.

In some embodiments, an electrode film is disposed on a current collector to form an electrode. In some embodiments, a current collector can include a metallic material, such as a material comprising aluminum, nickel, copper, combinations of the foregoing. In some embodiments, a current collector comprises a pure metal. In some embodiments, a current collector comprises a metallized polymer film or metal coated polymer film. In some embodiments, the polymer comprises polyethylene terephthalate (PET), biaxially oriented polypropylene (BOPP) or a combination thereof. In some embodiments, the metal coating comprises aluminum. In some embodiments, coating the final electrode film mixture comprises forming a uniform electrode film mixture coating. In some embodiments, the current collector comprises a thickness of, of about, of at most, or at most about, 200 μm, 100 μm, 50 μm, 40 μm, 30 μm, 20 μm, 15 μm, 10 μm, 5 μm, or any range of values therebetween.


Electrodes and Energy Storage Devices

An energy storage system or device includes a positive electrode (i.e., cathode), a negative electrode (i.e., anode), a separator disposed therebetween, and an electrolyte positioned within a housing. Each electrode includes an electrode film disposed over a current collector. The electrode includes an electrode film disposed over a current collector. In some embodiments, the current collector is a foil. In some embodiments, the current collector is aluminum foil, a copper foil, or combinations thereof. In some embodiments, a current collector can include a metallic material, such as a material comprising aluminum, nickel, copper, combinations of the foregoing. In some embodiments, a current collector comprises a pure metal. In some embodiments, a current collector comprises a metallized polymer film or metal coated polymer film. In some embodiments, the polymer comprises polyethylene terephthalate (PET), biaxially oriented polypropylene (BOPP) or a combination thereof. In some embodiments, the metal coating comprises aluminum. In some embodiments, coating the final electrode film mixture comprises forming a uniform electrode film mixture coating. In some embodiments, the current collector comprises a thickness of, of about, of at most, or at most about, 200 μm, 100 μm, 50 μm, 40 μm, 30 μm, 20 μm, 15 μm, 10 μm, 5 μm, or any range of values therebetween. In some embodiments, an active layer is disposed on each side of the current collector.

In some embodiments, an electrode is a double-sided electrode. In some embodiments, the double-sided electrode includes two electrode films. In some embodiments, the double-sided electrode may include a current collector, a top electrode film, and a bottom electrode film. In some embodiments, each of the two electrode films can have any suitable shape, size and thickness.

In some embodiments, the energy storage device comprises a separator, an anode electrode, the cathode electrode, an electrolyte, and a housing, wherein the electrolyte, separator, anode electrode and cathode electrode are disposed within the housing and the separator is positioned between the anode and cathode electrodes. In some embodiments, an energy storage device is formed by placing an electrolyte, a separator, an anode electrode and the cathode electrode described herein within a housing, wherein the separator is placed between the anode electrode and the cathode electrode.

An electrode assembly includes a cathode, an anode, and a separator positioned between the anode and cathode. In some embodiments, the electrode assembly is a wound electrode (i.e., rolled electrode) assembly (e.g., a jelly roll). In some embodiments, the energy storage device is selected from the group consisting of a cylindrical energy storage device, a stacked prismatic energy storage device, and a spiral-wound prismatic energy storage device.

The normalized circularity may be used to determine and/or correlate to a relatively weak core spot (e.g., a spot that may cause electrode buckling) in the wound electrode assembly. Normalized circularity for a nonideal spiral is defined as the minimum ratio between the nonideal (real) geometry versus ideal geometry on a point-by-point basis according to the equation below.

$$Normalized\ Circularity = \min_{i=1,2,..,n} \left( \frac{Nonideal\ Spiral\ Geometry}{Ideal\ Spiral\ Geometry} \right)$$

The nonideal (real) spiral geometry is given by measured Cartesian and polar coordinates $(x,y,\theta,r)$ and the ideal spiral geometry is derived from an Archimedean spiral according to $r = \alpha\theta + \beta$. The geometry of a spiral (ideal or nonideal) can be characterized by curvature (K), such as the polar curvature parameterization below.

$$K(\theta) = \frac{|r^2 + 2r'^2 - rr''|}{(r^2 + r'^2)^{3/2}}$$

In some embodiments, the electrode assembly comprises a normalized circularity value of, of about, of at least, or of at least about, 0.7, 0.705, 0.71, 0.715, 0.72, 0.725, 0.73, 0.735, 0.74, 0.745, 0.75, 0.76, 0.77, 0.78, 0.79, 0.8, 0.805, 0.81, 0.815, 0.82, 0.825, 0.83, 0.835, 0.84, 0.845, 0.85, 0.86, 0.87, 0.88, 0.89, 0.90, 0.91, 0.92, 0.93, 0.94, 0.95, 0.96, 0.97, 0.98, 0.99, 1, 1.05, 1.1, 1.15, 1.2 or any range of values therebetween.

The electrode disclosed herein may be used for an energy storage device. In some embodiments, the energy storage device comprises a separator, an anode electrode, the cathode electrode, an electrolyte, and a housing, wherein the electrolyte, separator, anode electrode and cathode electrode are disposed within the housing and the separator is positioned between the anode and cathode electrodes. In some embodiments, an energy storage device is formed by placing an electrolyte, a separator, an anode electrode and the cathode electrode described herein within a housing, wherein the separator is placed between the anode electrode and the cathode electrode. In some embodiments, the energy storage device comprises an anode electrode positioned between two cathode electrodes. In some embodiments, the anode electrode and/or the cathode electrode comprises a shaped electrode film. In some embodiments, the energy storage device is a lithium-ion battery. In some embodiments, the energy storage devices may be a battery, capacitor, capacitor-battery hybrid, fuel cell, or combinations thereof. In some embodiments, the energy storage system or energy storage device may be used for electromobility. In some embodiments, the energy storage device may be used in motor vehicles, including hybrid electric vehicles (HEV), plug-in hybrid electric vehicles (PHEV), and/or electric vehicles (EV). In some embodiments, the energy storage device used in motor vehicles, including hybrid electric vehicles (HEV), plug-in hybrid electric vehicles (PHEV), and/or electric vehicles (EV) reduces greenhouse gas emissions.

In some embodiments, the energy storage device is charged with a suitable lithium-containing electrolyte. For example, the energy storage device can include a lithium salt, and a solvent, such as a non-aqueous or organic solvent. Generally, the lithium salt includes an anion that is redox stable. In some embodiments, the anion can be monovalent. In some embodiments, a lithium salt can be selected from lithium hexafluorophosphate (LiPF$_6$), lithium bis(trifluoromethanesulfonyl)imide (LiFSI), lithium tetrafluoroborate (LiBF$_4$), lithium perchlorate (LiClO$_4$), lithium bis(trifluoromethansulfonyl)imide (LiN(SO$_2$CF$_3$)$_2$), lithium trifluoromethansulfonate (LiSO$_3$CF$_3$), lithium bis(oxalato)borate (LiB(C$_2$O$_4$)$_2$), lithium bis(fluorosulfonyl)imide (LiN(SO$_2$F)$_2$, lithium difluoro(oxalato)borate (LiC$_2$BF$_2$O$_4$) and combinations thereof. In some embodiments, the electrolyte can include a quaternary ammonium cation and an anion selected from the group consisting of hexafluorophosphate, tetrafluoroborate and iodide. In some embodiments, the salt concentration can be about 0.1 mol/L (M) to about 5 M, about 0.2 M to about 3 M, or about 0.3 M to about 2 M. In further embodiments, the salt concentration of the electrolyte can be about 0.7 M to about 2 M. In certain embodiments, the salt concentration of the electrolyte can be about 0.2 M, about 0.3 M, about 0.4 M, about 0.5 M, about 0.6 M, about 0.7 M, about 0.8 M. about 0.9 M, about 1 M, about 1.1 M, about 1.2 M, 1.3M, 1.4M, 1.5M or values therebetween.

In some embodiments, an energy storage device can include a liquid solvent. The solvent need not dissolve every component, and need not completely dissolve any component, of the electrolyte. In further embodiments, the solvent can be an organic solvent. In some embodiments, a solvent can include one or more functional groups selected from dioxathiolane (e.g., 1,3,2-dioxathiolane-2,2-dioxide (i.e., "DTD")), carbonates, ethers and/or esters. In some embodiments, the solvent can comprise a carbonate. In further embodiments, the carbonate can be selected from cyclic carbonates such as, for example, ethylene carbonate (EC), propylene carbonate (PC), vinyl ethylene carbonate (VEC), vinylene carbonate (VC), fluoroethylene carbonate (FEC), and combinations thereof, or acyclic carbonates such as, for example, dimethyl carbonate (DMC), diethyl carbonate (DEC), ethyl methyl carbonate (EMC), 1,3-propene sultone (PRS), and combinations thereof. In some embodiments, the solvent can comprise an ester. In some embodiments, the ester is selected from methyl acetate (MA), methyl propionate (MP), ethyl acetate (EA), methyl butyrate (MB), and combinations thereof. In some embodiments, the solvent may include EC, PC, VEC, VC, FEC, DMC, DEC, EMC, MA, MP, EA, MB, and combinations thereof. In some embodiments, the solvent may include EC, DMC, DEC, EMC, MA, and combinations thereof. In some embodiments, the solvent may include EC, DMC, EMC, and combinations thereof. In some embodiments, the solvent may include a ratio of EC:DMC:EMC of 10-30:0-90:0-70.

In some embodiments, one or more solvents can be used at a concentration of, of about, of at least, or at least about, 30 wt. %, 35 wt. %, 40 wt. %, 45 wt. %, 50 wt. %, 55 wt. %, 60 wt. %, 65 wt. %, 70 wt. %, 75 wt. %, 80 wt. %, 85 wt. % or 90 wt. %, or any range of values therebetween. In some embodiments, solvents are utilized as additives in the electrolyte system, and can be used at a concentration of, of about, of at most, or at most about, 0.1 wt. %, 0.2 wt. %, 0.3 wt. %, 0.4 wt. %, 0.5 wt. %, 0.6 wt. %, 0.7 wt. %, 0.8 wt. %, 0.9 wt. %, 1 wt. %, 1.1 wt. %, 1.2 wt. %, 1.3 wt. %, 1.4 wt. %, 1.5 wt. %, 1.6 wt. %, 1.7 wt. %, 1.8 wt. %, 1.9 wt. %, 2 wt. %, 2.1 wt. %, 2.2 wt. %, 2.3 wt. %, 2.4 wt. %, 2.5 wt. %, 2.6 wt. %, 2.7 wt. %, 2.8 wt. %, 2.9 wt. %, 3 wt. %, 4 wt. %, 5 wt. %, 6 wt. %, 7 wt. %, 8 wt. %, 9 wt. % or 10 wt. %, or any range of values therebetween. For example, in some embodiments, the amount of an additive in the electrolyte is or is about in any one of the following ranges: 0.1-10 wt.%, 1-6 wt.%, 2-5 wt.%, 0.1-6 wt.%, 2-8 wt.%, 2-3 wt.%, or 1-4 wt.%.

In some embodiments, an energy storage device is created such that one electrode (e.g., anode) is larger than and overhangs the other electrode (e.g., cathode). One electrode may overhang the other in the winding direction and/or non-winding direction of the electrode assembly. Such electrode overhangs may avoid yield losses. In some embodiments, where there is no, or is substantially no, overlap and/or intermingling of the separator and the shaped electrode film (e.g., cathode electrode film), the boundary of the shaped electrode film is easier to identify and therefore improves the ability to form a counter electrode (e.g., anode electrode) with an overhang.

EXAMPLES

Example embodiments of the present disclosure, including processes, materials and/or resultant products, are described in the following examples.

Example 1 -Particle Size Analysis

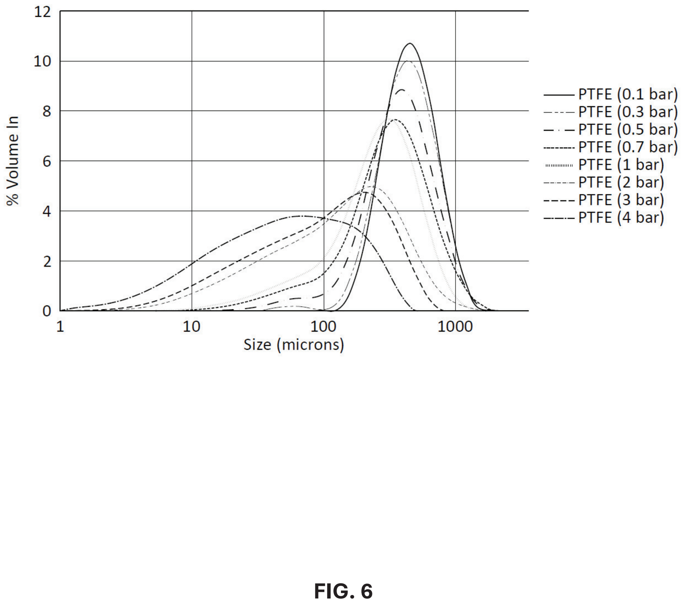

FIG. 6 is a data plot showing binder material deagglomeration based on volume % and size, measuring particle friability. As illustrated in FIG. 6, a PTFE binder material may be air milled at various pressures to adjust its particle size distribution. Particle friability was measured by a particle size analyzer where high friability indicated changes in particle size distribution.

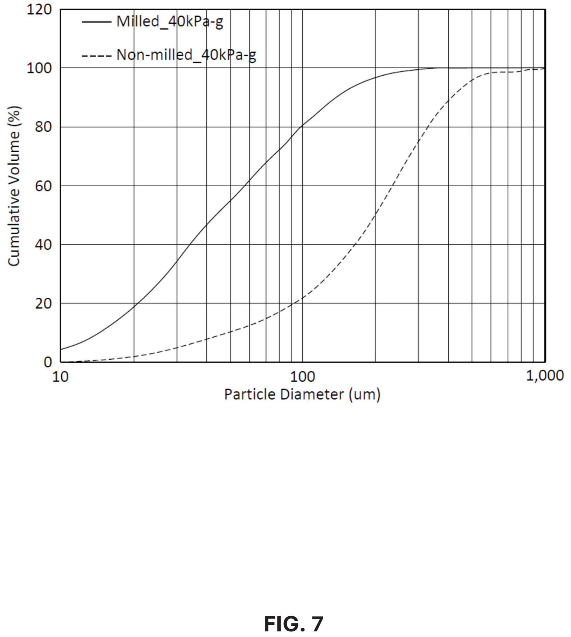

FIG. 7 is a data plot showing particle size distribution of air milled and non-milled binder materials based on cumulative volume % and particle diameter. As illustrated in FIG. 7, an air milled binder material has improved uniformity in particle size distribution, which may result in an improved cohesive electrode film structure.

Example 2 - Flow Rate and Pressure Profiles

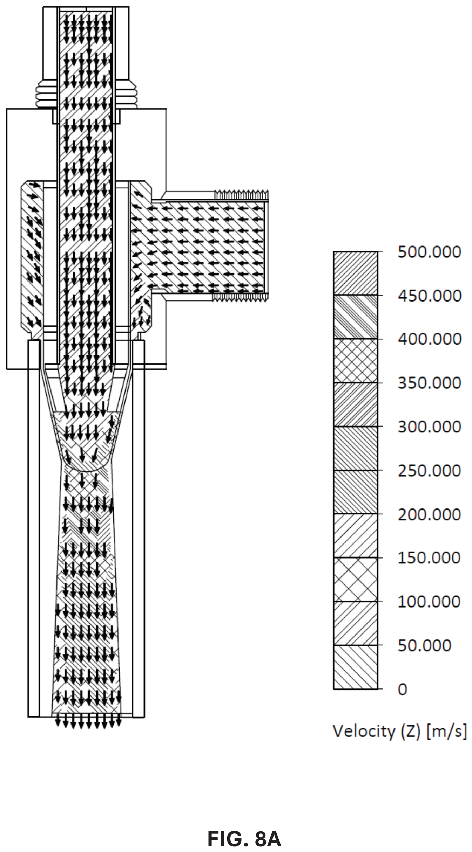

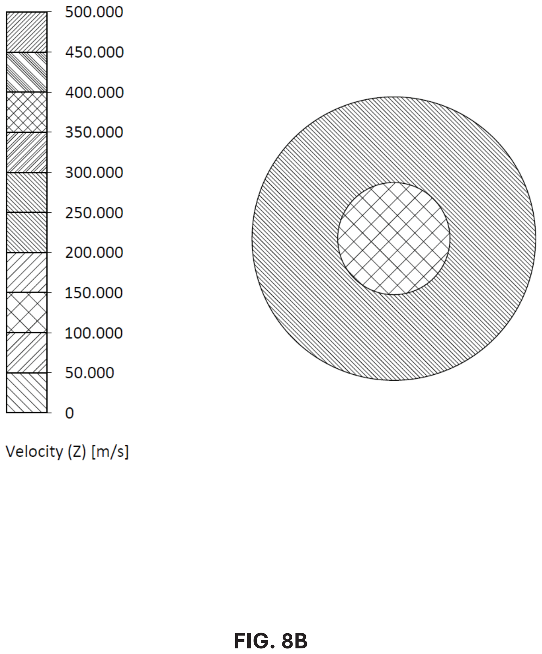

FIG. 8A is a flow vector diagram showing flow rate of binder materials moving through an air milling apparatus. FIG. 8B is a schematic illustration comparing an air flow path and a powder flow path.

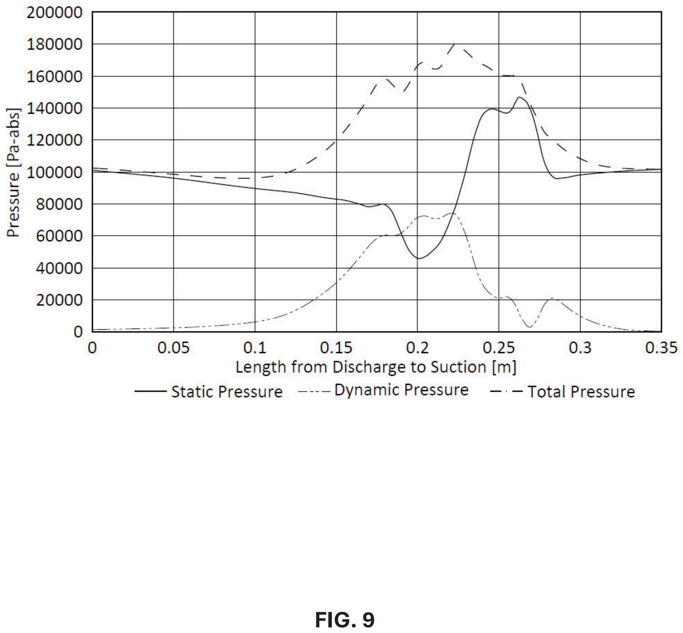

FIG. 9 is a data plot showing pressure profiles of air flowing from the air milling chamber to the mixing chamber. This data plot is based on CFD (computational fluid dynamics). As shown in FIG. 9, the data showed a Venturi effect, indicating an increase in fluid speed as materials or gases pass through a constricted section of the air milling chamber, leading to a decrease in pressure. The pressure was measured along the center of the air milling chamber. The pressurized chilled air supplied into the annulus accelerated the inner gas in the air milling chamber, producing a local vacuum (e.g., negative static pressure), helping to direct the materials into the air milling chamber. The air milling was accomplished by a combination of particle/gas friction shear, particle acceleration, and particle collisions with other material particles and the walls of the air milling chamber.

Example 3 - Mixing Profiles

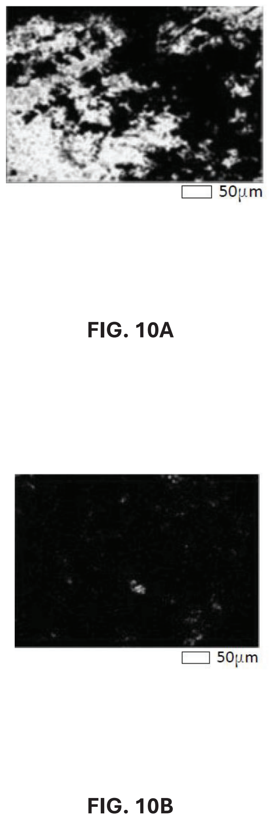

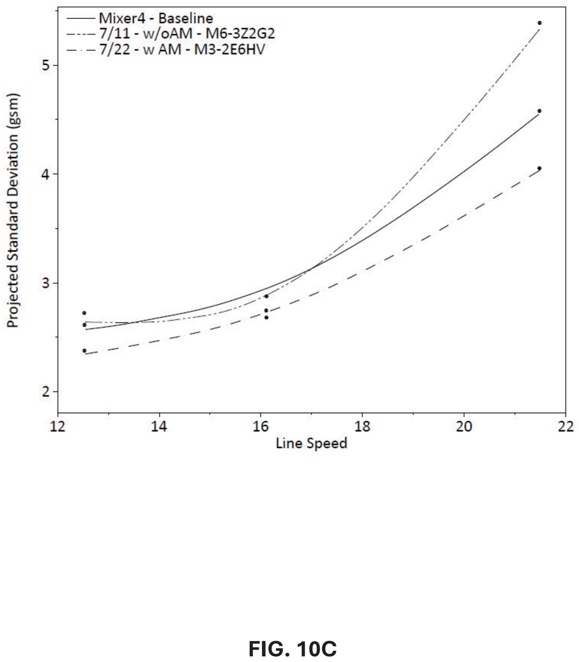

Particle sizes of PTFE binder were modified by tuning and adjusting the pressures of the air milling apparatus. Increased pressure resulted in finer PTFE particles (i.e., powder). FIG. 10A is an energy-dispersive spectroscopy (EDS) image of a non-milled binder material (i.e., using pristine PTFE) under standard homogenization. FIG. 10B is an EDS image of an air milled binder material (i.e., 140kPa milled PTFE) under homogenization for 3 minutes. As illustrated in FIGS. 10A and 10B, the size of the fibrils was larger in size for a non-milled PTFE binder as denoted by the strong fluorescent signal. Compared to non-milled PTFE binders, air milled PTFE binders showed reduced homogenization and fibrillization mixing time. FIG. 10C is a data plot showing projected standard deviation vs. line speed of various air milled and non-milled binder materials.

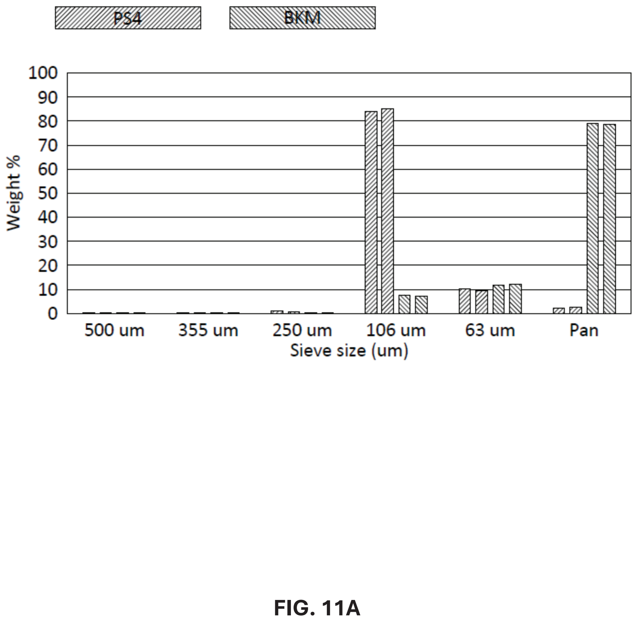

FIG. 11A is a data plot showing the amount of attached and unattached fibrillized binders in weight % based on sieve size. A sieve retainer pan was used to show amounts of unattached binder particles. Any unattached binder particles smaller than 63 $\mu$m fell through the sieve retainer pan. As illustrated in FIG. 11A, a large portion (in weight %) of non-milled fibrillized binder particles fell through the sieve retainer pan which indicated a lower number of attached binders. In comparison, a large portion (in weight %) of air milled fibrillized binder particles were caught with the sieve retainer pan which indicated a higher number of attached binder particles.

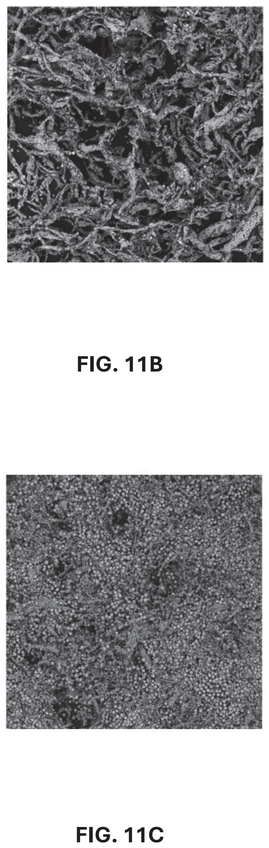

FIGS. 11B and 11C are scanning electron microscopy (SEM) images of a non-milled binder material and air milled binder material on a stiff cathode, respectively. As illustrated in FIGS. 11B and 11C, processing an electrode film mixture using non-milled binder materials created large fibrils with low surface area, while electrode film mixtures using air milled binder materials reduced into smaller fibrils that had more surface area and bonding capability.

While certain embodiments of the inventions have been described, these embodiments have been presented by way of example only, and are not intended to limit the scope of the disclosure. Indeed, the novel methods and systems described herein may be embodied in a variety of other forms. Furthermore, various omissions, substitutions and changes in the systems and methods described herein may be made without departing from the spirit of the disclosure. The accompanying claims and their equivalents are intended to cover such forms or modifications as would fall within the scope and spirit of the disclosure. Accordingly, the scope of the present inventions is defined only by reference to the appended claims.

Features, materials, characteristics, or groups described in conjunction with a particular aspect, embodiment, or example are to be understood to be applicable to any other aspect, embodiment or example described in this section or elsewhere in this specification unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The protection is not restricted to the details of any foregoing embodiments. The protection extends to any novel one, or any novel combination, of the features disclosed in this specification (including any accompanying claims, abstract and drawings), or to any novel one, or any novel combination, of the steps of any method or process so disclosed.

Furthermore, certain features that are described in this disclosure in the context of separate implementations can also be implemented in combination in a single implementation. Conversely, various features that are described in the context of a single implementation can also be implemented in multiple implementations separately or in any suitable subcombination. Moreover, although features may be described above as acting in certain combinations, one or more features from a claimed combination can, in some cases, be excised from the combination, and the combination may be claimed as a subcombination or variation of a subcombination.

Moreover, while operations may be depicted in the drawings or described in the specification in a particular order, such operations need not be performed in the particular order shown or in sequential order, or that all operations be performed, to achieve desirable results. Other operations that are not depicted or described can be incorporated in the example methods and processes. For example, one or more additional operations can be performed before, after, simultaneously, or between any of the described operations. Further, the operations may be rearranged or reordered in other implementations. Those skilled in the art will appreciate that in some embodiments, the actual steps taken in the processes illustrated and/or disclosed may differ from those shown in the figures. Depending on the embodiment, certain of the steps described above may be removed, others may be added. Furthermore, the features and attributes of the specific embodiments disclosed above may be combined in different ways to form additional embodiments, all of which fall within the scope of the present disclosure. Also, the separation of various system components in the implementations described above should not be understood as requiring such separation in all implementations, and it should be understood that the described components and systems can generally be integrated together in a single product or packaged into multiple products. For example, any of the components for an energy storage system described herein can be provided separately, or integrated together (e.g., packaged together, or attached together) to form an energy storage system.

For purposes of this disclosure, certain aspects, advantages, and novel features are described herein. Not necessarily all such advantages may be achieved in accordance with any particular embodiment. Thus, for example, those skilled in the art will recognize that the disclosure may be embodied or carried out in a manner that achieves one advantage or a group of advantages as taught herein without necessarily achieving other advantages as may be taught or suggested herein.

Conditional language, such as "can," "could," "might," or "may," unless specifically stated otherwise, or otherwise understood within the context as used, is generally intended to convey that certain embodiments include, while other embodiments do not include, certain features, elements, and/or steps. Thus, such conditional language is not generally intended to imply that features, elements, and/or steps are in any way required for one or more embodiments or that one or more embodiments necessarily include logic for deciding, with or without user input or prompting, whether these features, elements, and/or steps are included or are to be performed in any particular embodiment.

Conjunctive language such as the phrase "at least one of X, Y, and Z," unless specifically stated otherwise, is otherwise understood with the context as used in general to convey that an item, term, etc. may be either X, Y, or Z. Thus, such conjunctive language is not generally intended to imply that certain embodiments require the presence of at least one of X, at least one of Y, and at least one of Z.

Language of degree used herein, such as the terms "approximately," "about," "generally," and "substantially" as used herein represent a value, amount, or characteristic close to the stated value, amount, or characteristic that still performs a desired function or achieves a desired result. For example, the terms "approximately", "about", "generally," and "substantially" may refer to an amount that is within less than 10% of, within less than 5% of, within less than 1% of, within less than 0.1% of, and within less than 0.01% of the stated amount, depending on the desired function or desired result.

The scope of the present disclosure is not intended to be limited by the specific disclosures of preferred embodiments in this section or elsewhere in this specification, and may be defined by claims as presented in this section or elsewhere in this specification or as presented in the future. The language of the claims is to be interpreted broadly based on the language employed in the claims and not limited to the examples described in the present specification or during the prosecution of the application, which examples are to be construed as non-exclusive.

ITEMS

1. A method of processing an electrode film mixture, comprising:

air milling a binder material by applying temperature-controlled gas with an air milling apparatus to form an air milled binder material, wherein the air milling apparatus comprises an air milling chamber and a pressurization insert positioned within the air milling chamber, wherein the air milling apparatus is attached to a mixing apparatus comprising a mixing chamber and wherein the pressurization insert comprises an outlet configured to provide a fluid communication between the air milling chamber and the mixing chamber;
dispersing the air milled binder material into a mixing chamber comprising an active material; and
mixing the air milled binder material and the active material in the mixing chamber to form an electrode film material mixture.

2. A system for processing an electrode film mixture, comprising:

a mixing apparatus comprising a mixing chamber; and
an air milling apparatus comprising an air milling chamber and a pressurization insert positioned within the air milling chamber, wherein the air milling apparatus is attached to the mixing apparatus and wherein the pressurization insert comprises an outlet configured to provide a fluid communication between the air milling chamber and the mixing chamber.

3. The system of item 2, wherein the outlet comprises a dispersion nozzle.
4. The system of item 2, wherein the mixing apparatus is a fluidized bed mixing apparatus.
5. The system of item 2, wherein the mixing chamber comprises a mixing blade.
6. The system of item 2, further comprising, a pressurized tank in fluid communication with the air milling apparatus.
7. A method of preparing an electrode film mixture, comprising:

air milling a material to form an air milled material;
dispersing the air milled material into a mixing chamber comprising an active material; and
mixing the air milled material and the active material in the mixing chamber to form an electrode film material mixture.

8. The method of item 7, further comprising gravity feeding the air milled material into the mixing chamber.
9. The method of item 7, further comprising premixing the material with a conductive additive.
10. The method of item 7, wherein mixing the air milled material with the active material in the mixing chamber is performed by a high-shear process.
11. The method of item 7, wherein the air milled material comprises a $D_{50}$ average particle size distribution of less than about 30 $\mu$m.
12. The method of item 7, wherein air milling comprises applying temperature-controlled gas to the material.
13. The method of item 12, wherein the temperature-controlled gas comprises a gas selected from the group consisting of hydrogen gas, nitrogen gas, argon gas, oxygen gas and combinations thereof.

14. The method of item 7, wherein air milling the material is performed at a gauge pressure between 0.1 atm to 4 atm.

15. The method of item 7, wherein mixing is performed at a temperature of at least about 20°C.

16. The method of item 7, further comprising coating the active material with a carbon material prior to dispersing or mixing.

17. The method of item 16, wherein the carbon material comprises activated carbon.

18. The method of item 7, wherein the active material is selected from the group consisting of graphite, lithium nickel manganese cobalt oxide (NMC), lithium nickel cobalt aluminum oxide (NCA), and combinations thereof.

19. The method of item 7, further comprising, preprocessing the material prior to air milling.

20. The method of item 19, wherein preprocessing comprises temperature controlling the material to a temperature of about -200-300°C.

21. The method of item 7, wherein the material is a binder material.

22. The method of item 21, wherein the binder material comprises a dry fibrillizable binder.

23. The method of item 21, wherein the binder material is selected from the group consisting of polytetrafluoroethylene (PTFE), polyethylene (PE), polypropylene (PP), polyvinylidene fluoride (PVDF), polyvinylene chloride, poly(phenylene oxide) (PPO), polyethylene-block-poly(ethylene glycol), poly(ethylene oxide) (PEO), poly(phenylene oxide) (PPO), polyethylene-block-poly(ethylene glycol), polydimethylsiloxane (PDMS), polydimethylsiloxane-coalkylmethylsiloxane, polyalkylenes, polyethers, styrene-butadiene, styrene-butadiene rubber (SBR), carboxymethylcellulose (CMC), co-polymers of polysiloxanes and polysiloxane, branched polyethers, polyvinylethers, co-polymers thereof and combinations thereof.

24. The method of item 7, wherein the electrode film material mixture is substantially free of solvent residue.

**Claims**

1.  A system for processing an electrode film mixture, comprising:

    a mixing apparatus comprising a mixing chamber; and
    an air milling apparatus comprising an air milling chamber and a pressurization insert positioned within the air milling chamber, wherein the air milling apparatus is attached to the mixing apparatus and wherein the pressurization insert comprises an outlet configured to provide a fluid communication between the air milling chamber and the mixing chamber.

2.  The system of Claim 1, wherein the outlet comprises a dispersion nozzle.

3.  The system of Claim 1 or 2, wherein the mixing apparatus is a fluidized bed mixing apparatus.

4.  The system of any one of Claims 1-3, wherein the mixing chamber comprises a mixing blade and/or further comprising, a pressurized tank in fluid communication with the air milling apparatus.

5.  A method of preparing an electrode film mixture, comprising:

    air milling a material to form an air milled material, wherein the material is air milled in an air milling apparatus comprising an air milling chamber and a pressurization insert positioned within the air milling chamber, the pressurization insert having an outlet configured to provide fluid communication to a mixing chamber of a mixing apparatus attached to the air milling apparatus;
    dispersing the air milled material into the mixing chamber comprising an active material; and
    mixing the air milled material and the active material in the mixing chamber to form an electrode film mixture.

6.  The method of Claim 5, further comprising gravity feeding the air milled material into the mixing chamber.

7.  The method of Claim 5 or 6, further comprising premixing the material with a conductive additive.

8.  The method of any one of Claims 5-7, wherein mixing the air milled material with the active material in the mixing chamber is performed by a high-shear process and/or wherein mixing is performed at a temperature of at least about 20°C.

9.  The method of any one of Claims 5-8, wherein the air milled material comprises a $D_{50}$ average particle size distribution of less than about 30 $\mu$m.

10. The method of any one of Claims 5-9, wherein air milling comprises applying temperature-controlled gas to the material, preferably wherein the temperature-controlled gas comprises a gas selected from the group consisting of hydrogen gas, nitrogen gas, argon gas, oxygen gas and combinations thereof, and/or wherein air milling the material is performed at a gauge pressure between 0.1 atm to 4 atm.

11. The method of any one of Claims 5-10, further comprising coating the active material with a carbon material prior to dispersing or mixing, preferably wherein the carbon material comprises activated carbon.

12. The method of any one of Claims 5-11, wherein the active material is selected from the group consisting of graphite, lithium nickel manganese cobalt oxide (NMC), lithium nickel cobalt aluminum oxide (NCA), and combinations thereof.

13. The method of any one of Claims 5-12, further comprising, preprocessing the material prior to air milling, preferably wherein preprocessing comprises temperature controlling the material to a temperature of about -200°C to about 300°C.

14. The method of any one of Claims 5-13, wherein the material is a binder material, preferably wherein the binder material comprises a dry fibrillizable binder, and more preferably, wherein the binder material is selected from the group consisting of polytetrafluoroethylene (PTFE), polyethylene (PE), polypropylene (PP), polyvinylidene fluoride (PVDF), polyvinylene chloride, poly(phenylene oxide) (PPO), polyethylene-block-poly(ethylene glycol), poly(ethylene oxide) (PEO), polydimethylsiloxane (PDMS), polydimethylsiloxane-coalkylmethylsiloxane, polyalkylenes, polyethers, styrene-butadiene, styrene-butadiene rubber (SBR), carboxymethylcellulose (CMC), co-polymers of polysiloxanes and polysiloxane, branched polyethers, polyvinylethers, co-polymers thereof and combinations thereof.

15. The method of any one of Claims 5-14, wherein the electrode film mixture is substantially free of solvent residue.

**FIG. 1**

_200_

_210_

_220_

_230_

_240_

**FIG. 2**

**FIG. 3**

**FIG. 4**

500

```
┌─────────────────────┐
│  Air Mill a Material to  │ ─── 510
│   Form an Air Milled    │
│       Material          │
└─────────────────────┘
           │
           ▼
┌─────────────────────┐
│  Disperse Air Milled    │ ─── 520
│       Material          │
└─────────────────────┘
           │
           ▼
┌─────────────────────┐
│   Mix Air Milled Material │ ─── 530
│   with an Active Material │
└─────────────────────┘
           │
           ▼
┌─────────────────────┐
│   Form Electrode Film   │ ─── 540
│        Mixture          │
└─────────────────────┘
```

**FIG. 5**

**FIG. 6**

**FIG. 7**

500.000
450.000
400.000
350.000
300.000
250.000
200.000
150.000
100.000
50.000
0

Velocity (Z) [m/s]

**FIG. 8A**

FIG. 8B

**FIG. 9**

**FIG. 10A**

**FIG. 10B**

**FIG. 10C**

**FIG. 11A**

**FIG. 11B**

**FIG. 11C**

Europäisches
Patentamt
European
Patent Office
Office européen
des brevets

# EUROPEAN SEARCH REPORT

**Application Number**

EP 26 15 0606

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 11 430 613 B2 (MAXWELL TECHNOLOGIES INC [US]; MITCHELL PORTER [US] ET AL.) 30 August 2022 (2022-08-30) * column 6, line 8 - line 13; figures 1a-1h * * column 14, line 30 - column 15, line 2 * * column 15, line 7 - line 22; figures 2a, 2b * * column 21, line 42 - line 62 * * column 22, line 53 - line 65 * * column 12, line 17 - line 40 * * column 26, line 50 - line 53 * ----- | 1-15 | INV. B05B15/652 H01M4/04 H01M4/139 H01M4/62 |
| Y | WO 2012/151341 A1 (AXION POWER INT INC [US]; DANDREA JAY [US]) 8 November 2012 (2012-11-08) * page 2, line 7 - page 12; figure 1; example 3 * * page 2, line 21 - line 24 * * page 8, line 6 - line 16 * * page 10, line 1 - line 10 * ----- | 1-15 | |
| A | US 2014/030590 A1 (WANG MINGCHAO [US] ET AL) 30 January 2014 (2014-01-30) * paragraph [0061] * ----- | 3 | **TECHNICAL FIELDS SEARCHED (IPC)** B05B H01M |

The present search report has been drawn up for all claims

| Place of search | Date of completion of the search | Examiner |
|---|---|---|
| The Hague | 24 April 2026 | Jones, Alexandra |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 26 15 0606

This annex lists the patent family members relating to the patent documents cited in the above-mentioned European search report.
The members are as contained in the European Patent Office EDP file on
The European Patent Office is in no way liable for these particulars which are merely given for the purpose of information.

24-04-2026

| Patent document cited in search report | | Publication date | Patent family member(s) | | Publication date |
|---|---|---|---|---|---|
| US 11430613 | B2 | 30-08-2022 | US | 2006146479 A1 | 06-07-2006 |
| | | | US | 2008206446 A1 | 28-08-2008 |
| WO 2012151341 | A1 | 08-11-2012 | AU | 2012250774 A1 | 14-11-2013 |
| | | | BR | 112013028414 A2 | 24-01-2017 |
| | | | CA | 2834780 A1 | 08-11-2012 |
| | | | CN | 103648977 A | 19-03-2014 |
| | | | EP | 2704991 A1 | 12-03-2014 |
| | | | JP | 5952387 B2 | 13-07-2016 |
| | | | JP | 2014522563 A | 04-09-2014 |
| | | | KR | 20140002021 A | 07-01-2014 |
| | | | MX | 350036 B | 24-08-2017 |
| | | | NZ | 617157 A | 30-10-2015 |
| | | | US | 2014127570 A1 | 08-05-2014 |
| | | | WO | 2012151341 A1 | 08-11-2012 |
| US 2014030590 | A1 | 30-01-2014 | NONE | | |

For more details about this annex : see Official Journal of the European Patent Office, No. 12/82

**EP 4 775 316 A1**

**Patent documents cited in the description**

- US 01670625